# EUROPEAN PATENT APPLICATION

(11) **EP 4 074 409 A1**
(43) Date of publication of application: **19.10.2022**
(21) Application number: 21020202.4
(22) Date of filing: 13.04.2021
(51) Int. Cl.: B01D 53/22

(54) **PROCESS FOR REDUCING CARBON DIOXIDE CONTENT OF GAS MIXTURE AND MEMBRANE SEPARATION ARRANGEMENT**

(71) Applicant: Linde GmbH, 82049 Pullach (DE)
(72) Inventor: Franz, Anette, München (DE); Jonhannink, Matthias, Köln (DE)
(74) Representative: Lu, Jing

(57) **Abstract**

A process (100) for reducing the carbon dioxide content of a gas mixture (A) containing carbon dioxide using at least four membrane separation steps (11-14) including a first membrane separation step (11), a second membrane separation step (12), a third membrane separation step (13) and a fourth membrane separation step (14) is provided, two of the at least four membrane separation steps (11, 13) being carried out using a glassy membrane and two of the at least four membrane separation steps (12, 14) being carried out using a rubbery membrane. A first retentate (R11) of the first membrane separation step (11) is withdrawn from the first membrane separation step (11) at a first withdrawal pressure and a first withdrawal temperature and is at least partially supplied to the second membrane separation step (12) at the first withdrawal pressure and the first withdrawal temperature, a second retentate (R12) of the second membrane separation step (12) is withdrawn from the second membrane separation step (12) at a second withdrawal pressure and a second withdrawal temperature and is at least partially supplied to the third membrane separation step (13) at the second withdrawal pressure and the second withdrawal temperature, a third retentate (R13) of the third membrane separation step (13) is withdrawn from the third membrane separation step (13) at a third withdrawal pressure and a third withdrawal temperature and is at least partially supplied to the fourth membrane separation step (14) at the third withdrawal pressure and the third withdrawal temperature, permeates (P11, P13) of the membrane separation steps (11, 13) being performed using the glassy membrane are at least partially combined to form a first combined permeate stream (P1), and permeates (P12, P14) of the membrane separation steps (12, 14) performed using the rubbery membrane are at least partially combined to form a second combined permeate stream (P2). A corresponding membrane separation arrangement is also part of the present invention.

## Description

The present invention relates to a process for reducing the carbon dioxide content of a gas mixture containing carbon dioxide and to a corresponding membrane separation arrangement according to the preambles of the independent claims.

### Background of the invention

Before natural gas can be transported by pipeline, it has to go through a complex purification process. As a natural product, natural gas does not just contain the main component methane. It also comprises unwanted components such as water, hydrogen sulphide, carbon dioxide, nitrogen and heavy hydrocarbons. These impurities must first be removed in pretreatment plants to meet typical specifications for the injection into gas pipelines and/or further processing steps. For example, before natural gas can be injected into a pipeline, the carbon dioxide share has typically to be brought down to a value between two and three percent.

The carbon dioxide content of natural gas varies from one reserve to another. In order to meet the growing demand for natural gas, and as many of the reserves of natural gas with a low carbon dioxide content have now been depleted, increasingly also natural gas from reserves with high carbon dioxide content of up to 50 or 70 percent is utilized. Therefore, there is a growing demand for advantageous processes for removing carbon dioxide from natural gas. This invention relates to such processes.

While the present invention is hereinafter described with a focus on natural gas, it is likewise usable with other gas mixtures containing at least one hydrocarbon, including particularly at least one of methane, ethane, propane and butane, and carbon dioxide as further specified below, such a gas mixture generally being referred to as a "gas mixture containing carbon dioxide" hereinafter.

Until now, chemical and physical processes were generally used to separate carbon dioxide from natural gas mixtures during pretreatment. Referred to as gas scrubbing, these processes are well established and well researched. However, scrubbing also has a number of drawbacks. Chemical scrubbing is relatively energy intensive as it requires large amounts of steam. If the content of carbon dioxide rises, so too does the amount of steam - and therefore energy - required. Furthermore, there are environmental concerns with the chemicals used in chemical scrubbing.

Membrane processes, which were proposed as an alternative to scrubbing, are based on a completely different separation principle and therefore offer major benefits over the conventional approach: The unwanted carbon dioxide is removed via a purely physical process, i.e. diffusion, where, in principle, the membrane works like a semipermeable barrier layer. The present invention relates to membrane processes. Membrane processes do not necessarily require external energy for the separation, and are therefore in some cases considered advantageous, particularly in case of high carbon dioxide contents of gas mixtures.

Polymeric membranes have been found to be of use in certain gas separations. Such polymeric membranes include glassy and rubbery membranes. Glassy membranes may e.g. be produced from polyimides, polysulfones, polycarbonates, polyamides, polyarylates and polypyrrolones, while rubbery membranes are most typically produced from compounds such as polydimethylsiloxane (PDMS).

Carbon dioxide can be separated from gas mixtures using said glassy membrane materials. As stated in US 10,569,218 B2, however, membranes prepared from glassy polymers are not believed to have sufficient performance for separations such as olefin recovery, liquefied petroleum gas (LPG) recovery, fuel gas conditioning, natural gas dew point control, nitrogen removal from natural gas, etc.

For glassy membranes, the permeant diffusion coefficient is of greater importance than the solubility coefficient. Generally, glassy separation membranes preferentially permeate smaller, less condensable gases such as hydrogen and methane over larger, more condensable gases such as higher hydrocarbons. However, carbon dioxide plays a special role and permeates even faster than methane, enabling a separation thereof from natural gas. On the other hand, in rubbery polymeric membranes, the permeant solubility coefficient is of greater importance that the diffusion coefficient. Therefore, rubbery polymeric membranes preferentially permeate the larger, more condensable gases over the smaller, less condensable gases.

Carbon dioxide removal from natural gas streams rich in carbon dioxide is commonly realized by employing glassy membranes as these allow for a selective transport of carbon dioxide to the permeate while maintaining the hydrocarbons at elevated pressure in the retentate. For the removal of hydrocarbons with two and more carbon atoms, in contrast, rubbery membranes are typically employed. These membranes allow for a selective transport of hydrocarbons to the permeate, while maintaining the more polar components, as carbon dioxide, at elevated pressure in the retentate.

As to further details of membrane processes, reference is made to expert literature such as A. Tabe-Mohammadi (1999) A Review of the Applications of Membrane Separation Technology in Natural Gas Treatment, Separation Science and Technology, 34:10, 2095-2111, DOI: 10.1081/SS-100100758.

The efficiency of membrane-based carbon dioxide removal, particularly with glassy membranes, is governed, among other factors, by the content of hydrocarbons with two and more carbon atoms in the natural gas. A high concentration of hydrocarbons commonly reduces the efficiency of the system. Particularly for natural gas streams with a high carbon dioxide content of more than 40 percent this can be problematic, as with a decreasing carbon dioxide content in the course of the separation these hydrocarbons are concentrated along the flow path in the membrane module. Hence, even for moderate carbon dioxide concentrations in the natural gas feed, significant concentrations will be obtained in the treated natural gas retentate. The more selective the membranes are for carbon dioxide, the higher said concentration of hydrocarbons in the retentate flow path will become. This constitutes a limit for exploiting the full potential of highly selective membranes.

According to US 10,569,218 B2 already cited above, the features of a glassy polymeric membrane and a rubbery polymeric membrane are combined to form a multiple membrane system allegedly having the advantages of both of the types of membranes. The membranes may include multiple glassy polymeric membranes and multiple rubbery polymeric membranes.

The present invention has the object of overcoming at least some of the disadvantages of membrane processes for the treatment of natural gas and other gas mixtures of comparable composition and to provide for an improved membrane separation.

### Disclosure of the invention

Against this background, the present invention proposes a process for reducing the carbon dioxide content of a gas mixture containing carbon dioxide and a corresponding membrane separation arrangement comprising the features of the independent claims. Advantageous embodiments of the present invention are the subject of the dependent claims and of the description that follows.

The process for reducing the carbon dioxide content of a gas mixture containing carbon dioxide according to the present invention uses at least four membrane separation steps including a first membrane separation step, a second membrane separation step, a third membrane separation step and a fourth membrane separation step, two of the at least four membrane separation steps being carried out using a glassy membrane and two of the at least four membrane separation steps being carried out using a rubbery membrane.

According to the present invention, a first retentate of the first membrane separation step is withdrawn from the first membrane separation step at a first withdrawal pressure and a first withdrawal temperature and is at least partially supplied to the second membrane separation step at the first withdrawal pressure and the first withdrawal temperature. Further according to the invention, a second retentate of the second membrane separation step is withdrawn from the second membrane separation step at a second withdrawal pressure and a second withdrawal temperature and is at least partially supplied to the third membrane separation step at the second withdrawal pressure and the second withdrawal temperature. Yet further according to the present invention, a third retentate of the third membrane separation step is withdrawn from the third membrane separation step at a third withdrawal pressure and a third withdrawal temperature and is at least partially supplied to the fourth membrane separation step at the third withdrawal pressure and the third withdrawal temperature.

That is, according to the present invention, the membrane separation steps are serially arranged in a way in which retentates of the membrane separation steps are passed to the subsequent membrane separation step, in contrast to arrangements such as disclosed in US 10,569,218 B2.

According to the present invention, permeates of the membrane separation steps being performed using the glassy membrane are at least partially combined to form a first combined permeate stream, and permeates of the membrane separation steps performed using the rubbery membrane are at least partially combined to form a second combined permeate stream.

Using the present invention, the accumulation of hydrocarbons with two and more carbon atoms, particularly selected from the group of ethane, propane and butane and higher hydrocarbons in the retentate flow path is reduced or eliminated. To achieve this, the commonly used glassy polymeric membranes are, according to the present invention, integrated in a hybrid system with rubbery membranes as mentioned.

In a particularly preferred embodiment of the present invention, a membrane separation arrangement is used in which for each of the at least four membrane separation steps individual membrane units are provided, wherein the membrane units are enclosed in a common cartridge housing. This embodiment, in other words, integrates the two membrane types in the pressure tubes. Particularly shell-side feed modules with glassy and rubbery membranes may be arranged in an alternating manner in this embodiment. According to an alternative, the glassy and rubbery membranes are arranged in one module. In a shell-side feed hollow fibre module the integration is realized by mixing glassy and rubbery fibres in the fibre bundle. The location of the different fibres in the potting is realized in a manner such that the permeates of the rubbery and the glassy fibres can be collected in separate streams.

Both solutions are preferably equipped with an appropriate new design of the permeate collection tube. This is preferably realized in a manner in which the two permeate streams of the rubbery and glassy membranes are separate compartments.

In the present invention, in other words, preferably a first collection arrangement for the first permeate stream and a second collection arrangement for the second permeate stream is also provided in the common cartridge housing. The first collection arrangement and the second collection arrangement may particularly be provided as coaxial tubes or as two parts of a tube divided by a dividing wall.

As mentioned, glassy and rubbery membranes are preferably used alternatingly. In other words, the first membrane separation step and the third membrane separation step are preferably carried out using the glassy membrane and the second membrane separation step and the fourth membrane separation step are preferably carried out using the rubbery membrane. Be it noted, however, that the present invention is not limited to this specific arrangement or to the specific number of membrane separation steps mentioned, provided that these are arranged as claimed. Particularly, the glassy and/or the rubbery membranes are provided in the form of fiber bundles.

As mentioned before, the present invention is particularly advantageous for being used to reduce the carbon dioxide content of natural gas, but not limited thereto. The natural gas particularly comprises hydrocarbons with two or two and more carbon atoms and comprises these hydrocarbons in a content varying with the source of natural gas. Carbon dioxide may be present in a content of 10 to 70, particularly 20 to 60 or 30 to 50 percent, all percentages relating to a molar content.

According to the present invention, the second withdrawal pressure is particularly below the first withdrawal pressure and the third withdrawal pressure is particularly below the second withdrawal pressure. The first, second and third withdrawal pressures are particularly between 20 and 80 bar, while the first, second and third withdrawal temperatures are particularly between 40 and 80 °C.

A membrane separation arrangement for reducing the carbon dioxide content of a gas mixture containing carbon dioxide is also part of the present invention. The membrane separation arrangement comprises at least four membrane separation units including a first membrane separation unit, a second membrane separation unit, a third membrane separation unit and a fourth membrane separation unit, two of the at least four membrane separation units being provided with a glassy membrane and two of the at least four membrane separation units being provided with a rubbery membrane.

According to the present invention, means are provided which are adapted to withdraw a first retentate from the first membrane separation unit at a first withdrawal pressure and a first withdrawal temperature and to at least partially supply the first retentate to the second membrane separation unit at the first withdrawal pressure and the first withdrawal temperature. Further according to the present invention, means are provided which are adapted to withdraw a second retentate from the second membrane separation unit at a second withdrawal pressure and a second withdrawal temperature and to at least partially supply the second retentate to the third membrane separation unit at the second withdrawal pressure and the second withdrawal temperature. Yet further according to the present invention, means are provided which are adapted to withdraw a third retentate from the third membrane separation unit at a third withdrawal pressure and a third withdrawal temperature and to at least partially supply the third retentate to the fourth membrane separation unit at the third withdrawal pressure and the third withdrawal temperature.

Means are provided which are adapted to at least partially combine the permeates of the membrane separation units provided with the glassy membrane to form a first combined permeate stream, and means are provided which are adapted to at least partially combine the permeates of the membrane separation units provided with the rubbery membrane to form a second combined permeate stream.

As to further features and specific advantages of the membrane separation arrangement according to the present invention, reference is made to the explanations of the inventive method and its embodiments above. This also applies to a membrane separation arrangement according to a particularly preferred embodiment of the present invention which comprises means adapted to perform a corresponding method.

The present invention is further described with reference to the appended drawings illustrating embodiments of the present invention vis-à-vis non-inventive embodiments.

### Short description of the Figures

Figure 1 illustrates a process for reducing the carbon dioxide content of a gas mixture containing carbon dioxide not forming part of the present invention.
Figure 2 illustrates a process for reducing the carbon dioxide content of a gas mixture containing carbon dioxide according to an embodiment of the present invention.
Figure 3 illustrates advantages of a process for reducing the carbon dioxide content of a gas mixture containing carbon dioxide according to an embodiment of the invention.

In the Figures, elements of identical or comparable construction and/or function are indicated with identical reference numerals and are not repeatedly explained for reasons of conciseness. Explanations relating to methods and steps thereof shall equally apply to apparatus adapted to carry out such method.

### Embodiments of the invention

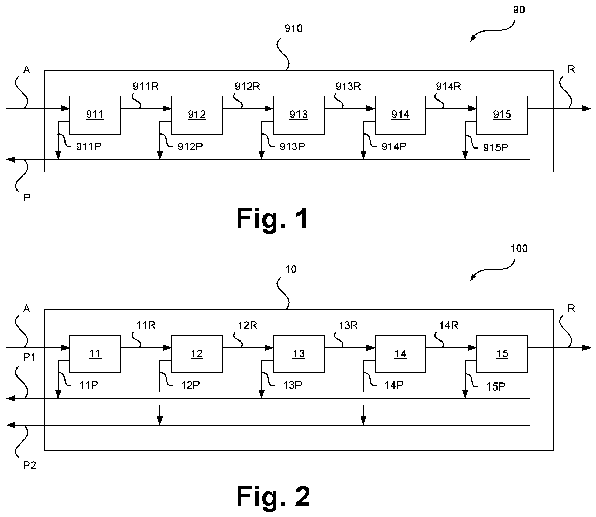

Figure 1 illustrates a process 90 for reducing the carbon dioxide content of a gas mixture containing carbon dioxide not forming part of the present invention.

In the process 90, a gas mixture containing carbon dioxide is supplied as a feed stream A to a membrane separation arrangement in which membrane units adapted to performe membrane separation steps 911 to 915 are arranged in an outer pressure shell 910. Retentates 911R to 914R of the steps 911 to 914 are passed as a feed to the downstream steps 912 to 915, while a retentate of the step 915 is exported as a final retentate stream R. Permeates 911P to 915P of the steps 911 to 915 are collected to form a common permeate stream P.

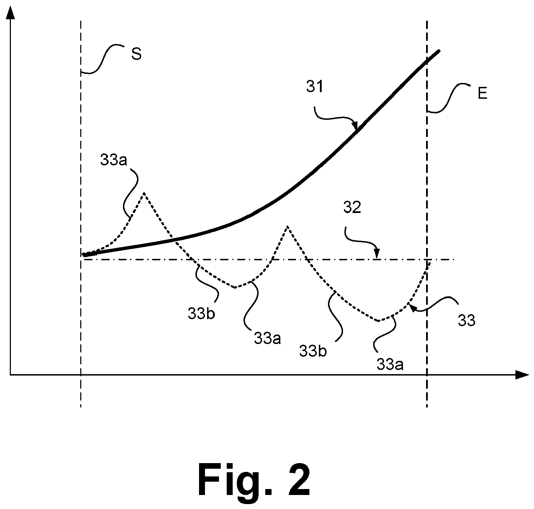

Figure 2 illustrates a process 100 for reducing the carbon dioxide content of a gas mixture containing carbon dioxide according to an embodiment of the invention.

In the process 100, a gas mixture containing carbon dioxide and hydrocarbons with two and optionally more carbon atoms, particularly natural gas with the specifications as indicated above, is supplied as a feed stream A to a membrane separation arrangement in which membrane units adapted to performe membrane separation steps 11 to 15 are arranged in an outer pressure shell 10. Membrane separation steps 11, 13 and 15, in the examples shown, are performed using glassy membranes while membrane steps 12 and 14 in the examples shown, are performed using rubbery membranes. Retentates 11R to 14R of the steps 11 to 14 are passed as a feed to downstream steps 12 to 15 under the conditions mentioned before, while a retentate of the step 15 is exported as a final retentate stream R. Permeates 11P, 13P and 15P are collected to form a first combined permeate stream P1 while permeates 12P and 14P are collected to form a second combined permeate stream P2.

That is, a first retentate R11 of a first membrane separation step 11 is withdrawn from the first membrane separation step 11 at a first withdrawal pressure and a first withdrawal temperature and is at least partially supplied to a second membrane separation step 12 at the first withdrawal pressure and the first withdrawal temperature. A second retentate R12 of the second membrane separation step 12 is withdrawn from the second membrane separation step 12 at a second withdrawal pressure and a second withdrawal temperature and is at least partially supplied to a third membrane separation step 13 at the second withdrawal pressure and the second withdrawal temperature. A third retentate R13 of the third membrane separation step 13 is withdrawn from the third membrane separation step 13 at a third withdrawal pressure and a third withdrawal temperature and is at least partially supplied to a fourth membrane separation step 14 at the third withdrawal pressure and the third withdrawal temperature. Additionally, as shown in Figure 2, a fourth retentate R14 of the fourth membrane separation step 14 is withdrawn from the fourth membrane separation step 13 at a fourth withdrawal pressure and a third withdrawal temperature and is at least partially supplied to a fifth membrane separation step 15 at the third withdrawal pressure and the third withdrawal temperature.

Furthermore, as explained in other words before, permeates P11, P13 and P15 of the membrane separation steps 11, 13 and 15 being performed using the glassy membrane are at least partially combined to form a first combined permeate stream P1, and permeates P12 and P14 of the membrane separation steps 12 and 14 performed using the rubbery membrane are at least partially combined to form a second combined permeate stream P2. In the membrane separation arrangement shown, for each of the at least four membrane separation steps 11 to 15, individual membrane units are provided, and the membrane units are enclosed in a common cartridge housing 10. While not explicitly shown in Figure 2, a first collection arrangement for the first permeate stream P1 and a second collection arrangement for the second permeate stream P2 is also provided in the common cartridge housing 10, wherein the first collection arrangement and the second collection arrangement may be provided as coaxial tubes or as two parts of a tube divided by a dividing wall.

Figure 3 illustrates advantages of a process for reducing the carbon dioxide content of a gas mixture containing carbon dioxide according to an embodiment of the invention, such as shown in Figure 2.

In Figure 3, a flow path of a retentate in metres is indicated on the horizontal axis versus a concentration of hydrocarbons with two and optionally more carbon atoms on the vertical axis. An entry into the membrane arrangement is indicates with a dashed line S while an exit therefrom is indicated with a dashed line E. A graph 31 (solid line) indicates the concentration of hydrocarbons with two and optionally more carbon atoms over the flow path in a conventional arrangement with only glassy membranes. As shown in a graph 32 (dash-dotted line), when integrating glassy and rubbery membranes in one cartridge, this concentration effect can be reduced. Graph 33 is obtained with alternating membrane separation steps involving glassy membranes (sections 33a) and rubbery membranes (section 33b), such as shown in Figure 2. Also in this case, the concentration effect mentioned at the outset can be eliminated.

## Claims

1. A process (100) for reducing the carbon dioxide content of a gas mixture (A) containing carbon dioxide using at least four membrane separation steps (11-14) including a first membrane separation step (11), a second membrane separation step (12), a third membrane separation step (13) and a fourth membrane separation step (14), two of the at least four membrane separation steps (11, 13) being carried out using a glassy membrane and two of the at least four membrane separation steps (12, 14) being carried out using a rubbery membrane,
**characterized in that**
- a first retentate (R11) of the first membrane separation step (11) is withdrawn from the first membrane separation step (11) at a first withdrawal pressure and a first withdrawal temperature and is at least partially supplied to the second membrane separation step (12) at the first withdrawal pressure and the first withdrawal temperature,
- a second retentate (R12) of the second membrane separation step (12) is withdrawn from the second membrane separation step (12) at a second withdrawal pressure and a second withdrawal temperature and is at least partially supplied to the third membrane separation step (13) at the second withdrawal pressure and the second withdrawal temperature,
- a third retentate (R13) of the third membrane separation step (13) is withdrawn from the third membrane separation step (13) at a third withdrawal pressure and a third withdrawal temperature and is at least partially supplied to the fourth membrane separation step (14) at the third withdrawal pressure and the third withdrawal temperature,
- permeates (P11, P13) of the membrane separation steps (11, 13) being performed using the glassy membrane are at least partially combined to form a first combined permeate stream (P1), and
- permeates (P12, P14) of the membrane separation steps (12, 14) performed using the rubbery membrane are at least partially combined to form a second combined permeate stream (P2).

2. The process (100) according to claim 1, wherein a membrane separation arrangement is used in which for each of the at least four membrane separation steps (11-14) individual membrane units are provided, wherein the membrane units are enclosed in a common cartridge housing (10).

3. The process (100) according to claim 2, wherein a first collection arrangement for the first permeate stream (P1) and a second collection arrangement for the second permeate stream (P2) is also provided in the common cartridge housing (10).

4. The process (100) according to claim 3, wherein the first collection arrangement and the second collection arrangement are provided as coaxial tubes or as two parts of a tube divided by a dividing wall.

5. The process (100) according to any of the preceding claims, wherein the first membrane separation step (11) and the third membrane separation step (13) are carried out using the glassy membrane and wherein the second membrane separation step (12) and the fourth membrane separation step (14) are carried out using the rubbery membrane.

6. The process (100) according to any of the preceding claims, wherein the glassy and/or the rubbery membranes are provided in the form of fiber bundles.

7. The process (100) according to any of the preceding claims, wherein natural gas is used as the gas mixture (A) containing carbon dioxide.

8. The process (100) according to any of the preceding claims, wherein natural gas comprising hydrocarbons with two or two and more carbon atoms is used as the gas mixture (A) containing carbon dioxide.

9. The process (100) according to any of the preceding claims, wherein the second withdrawal pressure is below the first withdrawal pressure and wherein the third withdrawal pressure is below the second withdrawal pressure.

10. The process (100) according to any of the preceding claims, wherein first, second and third withdrawal pressures are between 20 and 80 bar.

11. The process (100) according to any of the preceding claims, wherein first, second and third withdrawal temperatures are between 40 and 80 °C.

12. A membrane separation arrangement for reducing the carbon dioxide content of a gas mixture (A) containing carbon dioxide, the membrane separation arrangement comprising at least four membrane separation units including a first membrane separation unit, a second membrane separation unit, a third membrane separation unit and a fourth membrane separation unit, two of the at least four membrane separation units being provided with a glassy membrane and two of the at least four membrane separation units being provided with a rubbery membrane,
**characterized in that**
- means are provided which are adapted to withdraw a first retentate (R11) from the first membrane separation unit at a first withdrawal pressure and a first withdrawal temperature and to at least partially supply the first retentate to the second membrane separation unit at the first withdrawal pressure and the first withdrawal temperature,
- means are provided which are adapted to withdraw a second retentate (R12) from the second membrane separation unit at a second withdrawal pressure and a second withdrawal temperature and to at least partially supply the second retentate to the third membrane separation unit at the second withdrawal pressure and the second withdrawal temperature,
- means are provided which are adapted to withdraw a third retentate (R13) from the third membrane separation unit at a third withdrawal pressure and a third withdrawal temperature and to at least partially supply the third retentate to the fourth membrane separation unit at the third withdrawal pressure and the third withdrawal temperature,
- means are provided which are adapted to at least partially combine the permeates (P11, P13) of the membrane separation units provided with the glassy membrane to form a first combined permeate stream (P1), and
- means are provided which are adapted to at least partially combine the permeates (P12, P14) of the membrane separation units provided with the rubbery membrane to form a second combined permeate stream (P2).

13. The membrane separation arrangement of claim 12, comprising means adapted to perform a method (100) according to any one of claims 1 to 11.
